# EUROPÄISCHE PATENTSCHRIFT

(11) **EP 1 273 209 B1**
(45) Veröffentlichungstag und Bekanntmachung des Hinweises auf die Patenterteilung: **29.09.2004**
(21) Anmeldenummer: 01929436.2
(22) Anmeldetag: 15.03.2001
(51) Int. Cl.: H05B 33/08

(54) **ANSTEUERSCHALTUNG FÜR LEUCHTDIODEN**
CONTROL CIRCUIT FOR LIGHT-EMITTING DIODES
CIRCUIT DE COMMANDE POUR DIODES ELECTROLUMINESCENTES

(30) Priorität: 17.03.2000 DE 10013215
(43) Veröffentlichungstag der Anmeldung: 08.01.2003
(73) Patentinhaber: TridonicAtco GmbH & Co. KG, 6851 Dornbirn (AT)
(72) Erfinder: BARTH, Alexander, A-6850 Dornbirn (AT); HEIN, Peter, A-6833 Fraxern (AT); WERNER, Ludorf, A-6912 Hörbranz (AT)
(74) Vertreter: Rupp, Christian, Dipl.-Phys.
(86) Internationale Anmeldenummer: PCT/EP2001/002946
(87) Internationale Veröffentlichungsnummer: WO 2001/069980

(56) Entgegenhaltungen:
- WO-A-01/05193
- WO-A-98/49872
- GB-A- 2 333 593
- US-A- 5 604 673
- US-A- 5 661 645
- US-A- 6 057 651
- "DRIVER FOR SUPPLYING A PULSATING CURRENT TO LIGHT EMITTING DIODES" RESEARCH DISCLOSURE,GB,INDUSTRIAL OPPORTUNITIES LTD. HAVANT, Nr. 378, 1. Oktober 1995 (1995-10-01), Seite 651 XP000549126 ISSN: 0374-4353

## Beschreibung

Die vorliegende Erfindung betrifft eine Ansteuerschaltung für wenigstens eine Leuchtdiode mittels der die Helligkeit der Leuchtdioden (kurz LED's) auf einen gewünschten Wert regelbar ist.

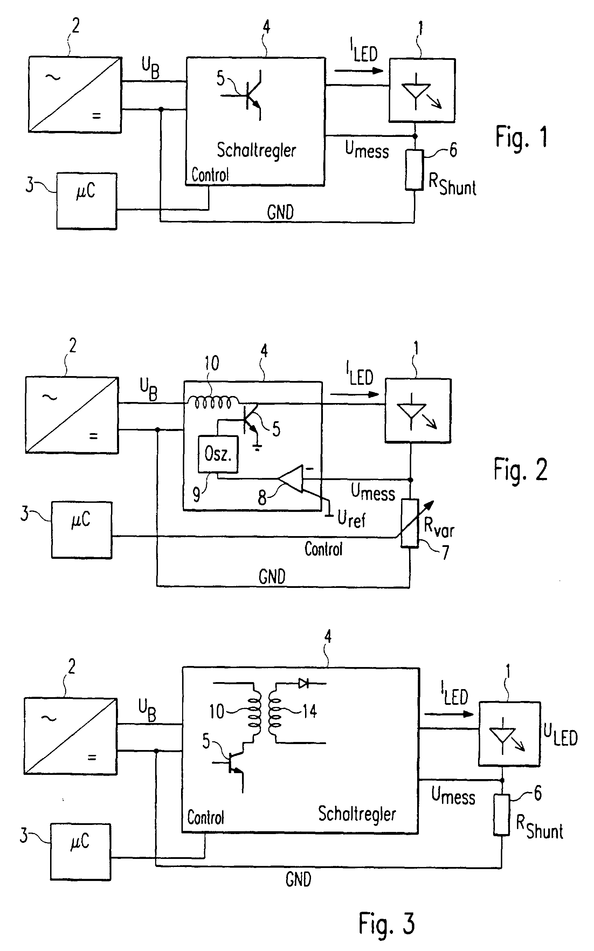

Aus dem Stand der Technik sind verschiedene derartige Ansteuerschaltungen bekannt. So ist z.B. in dem US-Patent Nr. 6,016,038 ein System zur Ansteuerung von LED-Anordnungen für Beleuchtungszwecke offenbart. Wie insbesondere die Figuren 1 und 2 des US-Patents zeigen, erfolgt die Ansteuerung der einzelnen LED's bzw. LED-Gruppen über einen durch die LED's fließenden, konstant geregelten Maximalstrom. Die Regelung des konstanten Maximalstroms erfolgt über integrierte Schaltungen. Der so geregelte Maximalstrom wird über eine Stromsenke ein- und ausgeschaltet, wobei die Stromsenke entsprechend dem gewünschten Verhältnis der Auszeiten und Einzeiten des Stroms angesteuert werden kann. Die für den Betrachter der LED's bzw. LED-Gruppen erzeugte Helligkeit kann so bekanntermaßen durch das Verhältnis der Ein- und Auszeiten des Stromes durch die LED's bestimmt werden.

Aus der US-A-6 057 651 und der CN 1 209 720 ist eine Ansteuerschaltung für Leuchtdioden mit einem Schaltregler und einer Regelvorrichtung für die Spannung an den Leuchtdioden sowie einem Controller zur Einstellung des Sollwerts vorbekannt.

Aus Research Disclosure, Oktober 1995, No. 378, Emsworth, GB, "Driver for supplying a pulsating current to Light Emitting Diodes" ist eine Ansteuerschaltung für Leuchtdioden mit einem Schaltregler, einer Stromregelung sowie einem Controller für die Regelung bekannt.

Aufgabe der vorliegenden Erfindung ist es, eine Ansteuerschaltung für wenigstens eine Leuchtdiode vorzusehen, mit der die Helligkeit der Leuchtdioden in einer verlustarmen Art und Weise und unabhängig von möglichen Spannungsschwankungen der Spannungsversorgung geregelt werden kann.

Diese Aufgabe wird durch eine Ansteuerschaltung mit den Merkmalen des Anspruches 1 gelöst.

Bei der erfindungsgemäßen Ansteuerschaltung wird der Strom und die Spannung der Leuchtdiode(n) auf einen einstellbaren Sollwert geregelt, wobei der Sollwert durch einen Controller einstellbar ist. Das Dimmen der LED's erfolgt somit direkt durch das Dimmen des Stroms und der Spannung.

Vorzugsweise kann der Schaltregler in einem AC/DC-Umsetzer integriert sein, der die Schaltung mit der erforderlichen Gleichspannung versorgt. Das heißt, der AC/DC-Umsetzer kann so ausgeführt sein, daß er direkt auf den gewünschten Strom- bzw. Spannungswert regelt.

In einer bevorzugten Ausführungsform der Erfindung verändert der Controller durch Einstellen des Sollwerts das Schaltverhalten des die Leuchtdioden ansteuernden Schaltreglers derart, daß die Schaltfrequenz oder das Tastverhältnis des Schaltreglers verändert wird. Vorzugsweise wird zur Regelung des Stroms bzw. der Spannung der Strom bzw. die Spannung mittels eines mit der Leuchtdiode in Serie bzw. parallel geschalteten Meßwiderstands erfaßt und die Helligkeit der Leuchtdioden mittels einer in der unmittelbaren Umgebung der Leuchtdioden angeordneten Photodiode erfaßt.

In einer anderen bevorzugten Ausführungsform der vorliegenden Erfindung verändert der Controller zum Einstellen des Sollwerts des Stroms durch die Leuchtdioden den Widerstandswert eines steuerbaren Widerstandes, welcher mit der Leuchtdiode in Serie geschaltet ist. In dieser Ausführungsform wird der Strom durch die Leuchtdioden mittels der über dem steuerbaren Widerstand abfallenden Spannung und/oder die Helligkeit der Leuchtdioden mittels einer in der unmittelbaren Umgebung der Leuchtdioden angeordneten Photodiode erfaßt.

Weitere bevorzugte Ausführungsformen und Weiterbildungen der Erfindung sind Gegenstand weiterer Unteransprüche.

Eine andere Weiterbildung der Erfindung betrifft Maßnahmen, durch welche die Ansteuerschaltung in ihren Abmessungen möglichst kompakt gehalten werden kann. Um dies zu erreichen, besteht die Ansteuerschaltung zumindest teilweise aus einer Mehrlagenschaltung, in die passive Bauelemente - z.B. Widerstände, Leiterbahnen und dergleichen - integriert sind. Diese Integration ist insbesondere dann möglich, wenn der Schaltregler mit hohen Frequenzen betrieben wird, da dann in der Schaltung entsprechend niedrigere Kapazitäts- bzw. Induktivitätswerte verwendet werden können. Im vorliegenden Fall hat sich ein Frequenzbereich von 200 kHz bis 1 MHz als besonders geeignet herausgestellt. Eine durch die Frequenzerhöhung zunächst bedingte erhöhte Abstrahlung von elektromagnetischen Hochfrequenz-Feldern kann durch geeignete Abschirmmaßnahmen vermieden werden, die - aufgrund der reduzierten Abmessungen der Schaltung - einfach vorgenommen werden können.

Die Integrierung von Bauelementen kann beispielsweise durch eine mehrlagige Leiterplatten-Technik erfolgen. Vorzugsweise wird die Mehrlagenschaltung durch eine LTCC- (Low Temperature Cofired Ceramic) Struktur realisiert, welche aus mehreren übereinander angeordneten niedrig-sinternden Keramikschichten oder -folien besteht, zwischen denen sich Leiterbahnen befinden. Gegenüber der herkömmlichen Leiterplattentechnik kann mit dieser in den letzten Jahren neu entwickelten und beispielsweise aus der EP 0 581 206 A2 bekannten LTCC-Technik eine nochmalige Miniaturisierung der Schaltung erreicht werden. Dabei können neben den Leiterbahnen insbesondere auch Induktivitäten und Kapazitäten in die Mehrlagenschaltung integriert werden. Ferner bietet das Keramik-Material den Vorteil, daß es Wärme relativ gut leitet, was bedeutet, daß bei gleichem Bauvolumen größere Leistungen erzielt werden können, da Verlustwärme besser abgestrahlt wird. Vorzugsweise wird die Wärmeableitung durch Einbetten der Keramikstruktur in ein metallisches Gehäuse nochmals erhöht. Auf diese Weise kann auch eine effektive Abschirmung der von der Ansteuerschaltung in die Umgebung abgestrahlten Hochfrequenz-Felder erzielt werden.

Bei den oben genannten Frequenzen kann ein Großteil der Bauelemente der Ansteuerschaltung in die Mehrlagenschaltung integriert werden. Die verbleibenden passiven Bauelemente sowie Halbleiter-Baugruppen sind allerdings nach wie vor an der Oberfläche bzw. außerhalb der Keramikstruktur anzubringen. Um auch hierfür einen möglichst geringen Platzbedarf zu erzielen, werden die Halbleiter-Baugruppen vorzugsweise mittels der bekannten Flip-Chip- (FC) Technik auf dem Keramiksubstrat montiert. Dabei wird zwischen dem gehäuselos montierten Halbleiter sowie den Kontakten auf der Oberfläche des Trägersubstrats eine Kunststoffschicht eingebracht, die zum einen senkrecht zur Kontaktierungsebene elektrisch leitfähig und in der Kontaktierungsebene isolierend wirkt und die zum anderen die sich bei einer unterschiedlichen thermischen Ausdehnung der Halbleiterbaugruppe und des Keramiksubstrats ergebenden Spannungen aufnimmt und somit eine Zerstörung der Halbleiterbaugruppe verhindert.

Die Erfindung wird nachfolgend anhand verschiedener bevorzugter Ausführungsbeispiele unter Bezugnahme auf die anliegenden Zeichnungen näher erläutert. Darin zeigen:
Fig. 1 bis 5 schematische Schaltungsaufbauten, die nicht als Ausführungsbeispiele der Erfindung gelten.
Fig. 6 und 7 den schematischen Schaltungsaufbau von Ausführungsbeispielen der erfindungsgemäßen Ansteuerschaltung;
Fig. 8a und b den zeitlichen Verlauf von Steuersignalen sowie des LED-Stroms in den Ausführungsbeispielen der Fig. 6 und 7;
Fig. 9 den schematischen Schaltungsaufbau eines weiteren Ausführungsbeispieles der erfindungsgemäßen Ansteuerschaltung;
Fig. 10a-15 die Fertigungsschritte einer Mehrlagen-Keramik- (LTCC) Struktur; und
Fig. 16 einen vergrößerten Ausschnitt einer LTCC-Struktur.

In den Figuren 1 und 2 sind zunächst zwei grundlegende Ansteuerschaltungen dargestellt, während die Figuren 3 bis 7 und 9 Abwandlungen bzw. Weiterentwicklungen beschreiben.. In den Figuren sind gleiche oder ähnliche Elemente mit den gleichen Bezugszeichen gekennzeichnet.

Die in Figur 1 dargestellte Ansteuerschaltung weist im wesentlichen eine Gleichspannungsquelle bzw. einen AC/DC-Umsetzer 2, einen Schaltregler 4, eine Leuchtdiode bzw. Leuchtdioden-Anordnung mit mehreren Leuchtdioden 1 und einen Mikrocontroller 3 auf. Die Ausgangsspannung des AC/DC-Umsetzers 2 wird dem Schaltregler 4 als Eingangsspannung U_{B} zugeführt. Der Schaltregler 4 regelt entsprechend einem ihm von dem Mikrocontroller 3 zugeführten Steuersignal den Strom I_{LED} an seinem Ausgang, welcher den Leuchtdioden 1 zugeführt wird.

Im Falle des in Figur 1 dargestellten ersten Beispiels ist in Serie mit der Leuchtdiode 1 ein Meßwiderstand 6 in Form eines ohmschen Widerstandes geschaltet. Zur Regelung des Stroms durch die Leuchtdioden 1 wird der Spannungsabfall über dem Meßwiderstand 6 erfaßt und als Meßsignal Uₘₑₛₛ dem Schaltregler 4 zugeführt. In dem Schaltregler wird der aus diesem Meßsignal Uₘₑₛₛ erfaßte Strom durch die Leuchtdioden mit dem durch den Mikrocontroller 3 zugeführten Sollwert des Stroms durch die Leuchtdioden verglichen und der Strom I_{LED} entsprechend geregelt.

Der Schaltregler 4 kann beispielsweise als Tiefsetzsteller, als isolierender Sperrwandler oder als Hochsetzsteller ausgebildet sein, wobei der Mikrocontroller 3 ein entsprechendes Halbleiter-Schaltelement 5 des Tiefsetzstellers bzw. Hochsetzstellers 4 ansteuert. Ein Beispiel für die Ausführung des Schaltreglers 4 als Hochsetzsteller ist beispielsweise in Figur 2 des zweiten Ausführungsbeispieles der Ansteuerschaltung dargestellt. Der Controller 3 regelt das Schaltverhalten des Schaltreglers 4 derart, daß die Schaltfrequenz oder das Tastverhältnis des Schaltreglers 4 verändert wird, indem der Mikrocontroller 3 das Halbleiter-Schaltelement 5 des Schaltreglers 4 entsprechend ansteuert, insbesondere mittels Pulsweitenmodulation, Taktung, Steuersignal an Slave, Nutzung der Fehlerabschaltung, amplitudenmodulierten Signalen und Abrechen der Versorgungsspannung und dgl.

Die Ansteuerschaltung gemäß Figur 1 zeichnet sich durch eine verlustarme LED-Ansteuerung aus, die unabhängig von der Ausgangsspannung der Gleichspannungsquelle bzw. des AC/DC-Umsetzers 2 ist, d.h. Spannungsschwankungen der Spannungsquelle 2 sind ohne Einfluß auf die Helligkeit der Leuchtdioden 1, so daß die Anforderungen an die Gleichspannungsquelle bzw. den Umsetzer 2 geringer als bei herkömmlichen Ansteuerschaltungen sind.

Die in Fig. 1 dargestellte Ansteuerschaltung sowie die weiteren Beispiele sind so ausgelegt, daß die Ausgangsspannung des Schaltreglers an die Anzahl der in Reihe geschalteten LED's angepaßt wird. Dabei kann die Leuchtdioden-Anordnung als Parallelschaltung von in Serie geschalteten LED's oder aus einer Serienschaltung von LED-Parallelschaltungen bestehen. Auch eine Kombination dieser beiden Möglichkeiten ist realisierbar.

Die in Figur 2 dargestellte Ansteuerschaltung weist im Gegensatz zu der von Figur 1 keinen ohmschen Meßwiderstand 6 auf. Anstelle des Meßwiderstands 6 ist in Serie mit den Leuchtdioden 1 ein steuerbarer Widerstand 7, vorzugsweise in der Form eines Feldeffekttransistors, geschaltet. Dieser steuerbare Widerstand 7 wird durch den Controller 3 gesteuert, um den Strom durch die Leuchtdioden 1 zu regeln und damit verschiedene Dimmstufen zu ermöglichen.

Der Mikrocontroller 3 gibt den Widerstandswert des steuerbaren Widerstandes 7 und damit den Sollwert für den Strom durch die Leuchtdioden 1 vor. Der gemessene Spannungsabfall über dem steuerbaren Widerstand 7 ist ein Maß für den durch die Leuchtdioden 1 und den steuerbaren Widerstand 7 fließenden Strom und wird dem Schaltregler 4 zugeführt. Im Schaltregler 4 wird der gemessene Spannungsabfall mit einem voreingestellten Sollwert U_{ref} für den Spannungsabfall verglichen, woraufhin der Schaltregler den Strom I_{LED} durch die LED's so regelt, daß der gemessene Spannungsabfall sich dem voreingestellten Spannungswert U_{ref} annähert bzw. angleicht. Je nach eingestelltem Widerstandswert des steuerbaren Widerstandes 7 ist ein anderer Strom I_{LED} erforderlich, um den voreingestellten Spannungsabfall U_{ref} über dem steuerbaren Widerstand 7 zu erzielen, so daß der Mikrocontroller 3 durch Steuerung des Widerstandswertes des steuerbaren Widerstandes 7 den Sollwert für den Strom durch die Leuchtdioden einstellt.

Gemäß Figur 2 ist der Schaltregler 4 als Hochsetzsteller ausgebildet. Insbesondere weist der Hochsetzsteller 4 eine Spule 10 und ein Halbleiter-Schaltelement 5 auf, die in üblicher Weise wie in Figur 2 dargestellt angeordnet sind. Ferner wird das Meßsignal Uₘₑₛₛ der über dem steuerbaren Widerstand 7 abfallenden Spannung dem negativen Einfang eines Operationsverstärkers 8 zugeführt. Der positive Eingang des Operationsverstärkers 8 liegt auf dem konstanten Referenzpotential U_{ref}. Das Ausgangssignal des Operationsverstärkers 8 wird einer Oszillatorschaltung 9 zugeführt, welche das Halbleiter-Schaltelement 5 ansteuert. Die Oszillatorschaltung 9 ermöglicht eine hochfrequente Ansteuerung des Halbleiter-Schaltelements 5, wobei die Schaltfrequenz von dem Meßsignal Uₘₑₛₛ und somit von dem tatsächlichen Strom durch Leuchtdioden 1 abhängt. Die Höhe des den Leuchtdioden 1 von dem Schaltregler 4 zugeführten Stromes I_{LED} hängt von dem Schaltzeit-Parameter des Halbleiter-Schaltelements 5 ab.

Fig. 3 zeigt eine Abwandlung der in Fig. 1 dargestellten Ansteuerschaltung, bei der die Spule 10 bzw. die Boostdrossel des Schaltreglers 4 induktiv mit einer weiteren Spule 14, die an den Ausgang des Schaltreglers 4 angeschlossen ist, gekoppelt ist. Der Vorteil einer auf diese Weise gebildeten Potentialtrennung besteht darin, daß der Schaltregler 4 über ein variables Übersetzungsverhältnis zwischen seiner Eingangs- und seiner Ausgangsspannung verfügt. Auf diese Weise kann eine von der Versorgungsspannung U_{B} unabhängige LED-Spannung U_{LED} erhalten werden. Dies bedeutet, daß bei dieser Schaltungsvariante die LED-Spannung U_{LED} sowohl größer als auch kleiner als die Versorgungsspannung U_{B} sein kann.

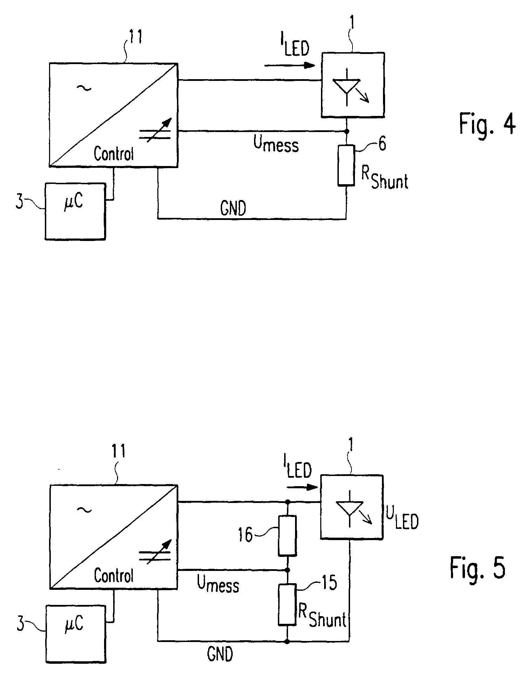

Bei der in Figur 4 dargestellten Ansteuerschaltung ist der AC/DC-Umsetzer 11 so ausgeführt, daß er direkt den gewünschten Strom I_{LED} durch die Leuchtdioden 1 regelt. Das heißt, der Schaltregler 4 ist in den AC/DC-Umsetzer 2 integriert.

Zur Einstellung des Sollwertes des Stroms durch die Leuchtdioden sind auch bei dieser Ausführungsform beide der anhand der Figuren 1 und 2 beschriebenen Steuerungsmöglichkeiten einsetzbar. In Figur 4 wird der Sollwert des Stroms wie im Falle des ersten Ausführungsbeispiels von Figur 1 eingestellt, d.h. es ist ein ohmscher Meßwiderstand 6 in Serie mit den Leuchtdioden 1 geschaltet und der Mikrocontroller 3 regelt das Schaltverhalten des Schaltreglers 4. Ebenso kann aber auch in Serie mit den Leuchtdioden 1 ein steuerbarer Widerstand 7 vorgesehen sein, dessen Widerstandswert über den Mikrocontroller 3 eingestellt wird, wie dies bei dem zweiten Ausführungsbeispiel von Figur 2 der Fall ist.

Bei dem in Fig. 5 dargestellten Beispiel ist der Schaltregler 4 wie in Fig. 4 in den AC/DC-Umsetzer 2 integriert. Allerdings erfolgt bei dieser Schaltungsvariante die Regelung nicht auf den LED-Strom I_{LED}, sondern auf die LED-Spannung U_{LED}. Zu diesem Zweck ist der Leuchtdiode 1 ein aus zwei Widerständen 15, 16 bestehender Spannungsteiler parallelgeschaltet. Die über den Widerstand 15 abfallende und die LED-Spannung U_{LED} repräsentierende Spannung wird dem AC/DC-Umsetzer 11 als Eingangssignal Uₘₑₛₛ zugeführt. Innerhalb des AC/DC-Umsetzers 11 erfolgt wiederum ein Vergleich des Eingangssignals Uₘₑₛₛ mit dem durch den Mikrocontroller 3 vorgegebenen Steuersignal.

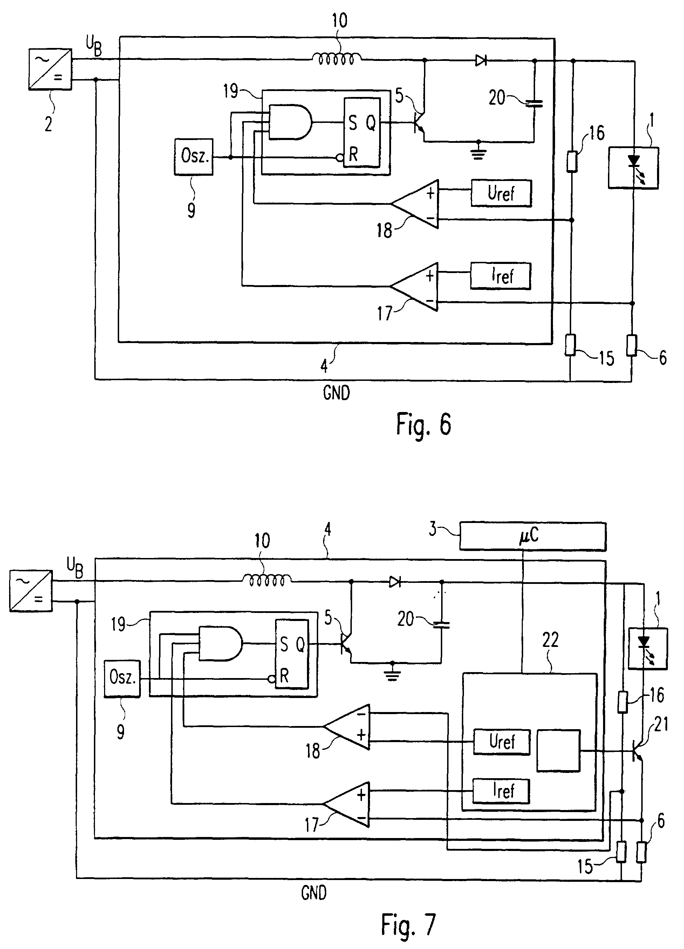

Die in den vorherigen Figuren dargestellten Möglichkeiten zur Strom- und Spannungsregelung werden bei dem in Fig. 6 dargestellten Ausführungsbeispiel der vorliegenden Erfindung kombiniert. Diese Schaltung basiert auf der in Fig. 2 dargestellten Schaltung, d.h., der Schaltregler 4 wird durch einen Hochsetzsteller gebildet, der nun allerdings durch eine kombinierte Strom- und Spannungsregelung gesteuert wird. Dabei werden intern ein Referenzstrom I_{ref} und eine Referenzspannung U_{ref} vorgegeben, die aufgrund eines durch den (hier nicht dargestellten) Mikrocontroller übertragenen Steuersignals gebildet werden. Als Eingangssignale werden ferner die über den Widerstand 6 abfallende Spannung, die dem LED-Strom entspricht, und die über dem Widerstand 15 des Spannungsteilers abfallende Spannung, die der LED-Spannung entspricht, zugeführt, die dann mit den entsprechenden Referenzwerten U_{ref} bzw. I_{ref} durch Operationsverstärker 17 bzw. 18 verglichen werden.

Der Regler arbeitet derart, daß er je nach Über- oder Unterschreiten der Referenzwerte U_{ref} bzw. I_{ref} durch die Meßwerte die Einspeisung über den Schaltregler senkt bzw. erhöht, wobei jeweils ein Operationsverstärker 17 oder 18 als Regler fungiert. Je nach Abweichen eines Istwerts vom Sollwert wird ein von den Operationsverstärkern 17, 18 ausgegebenes Regelsignal über eine Schaltung 19 mit dem Rampensignal eines Oszillators 9 verknüpft, so daß ein Takten des Schalters 5 sichergestellt ist. Durch einen am Ausgang des Schaltreglers angeordneten Kondensator 20 schließlich wird eine Glättung des durch die LED 1 fließenden Stromes bewirkt.

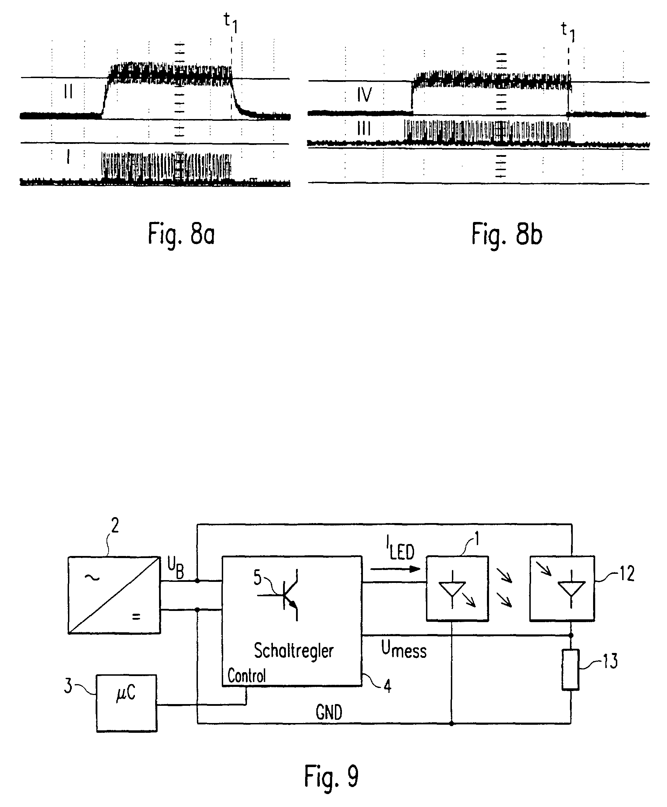

Die Verknüpfung des Oszillatorsignals mit den Regelsignalen der beiden Operationsverstärker 17, 18 ergibt ein hochfrequentes, gepulstes Taktsignal für den Schalter 5, das durch die untere Signalkurve I in Fig. 8a dargestellt ist. Dieses Signal kann sowohl in seiner Frequenz als auch in der Dauer des Ein- bzw. Ausschaltpulses variiert werden. Die obere Signalkurve II zeigt den daraus resultierenden LED-Strom. Wie dieser Darstellung zu entnehmen ist, fällt der LED-Strom nach dem Abschalten des Boost-Taktes zum Zeitpunkt t₁ in einer bestimmten Zeit ab. Dieses Durchfahren der Amplitude kann allerdings eine Farbveränderung des von der LED 1 emittierten Lichts zur Folge haben.

Um einen farbechten LED-Betrieb zu erzielen, wurde daher die in Fig. 7 dargestellte Schaltungsvariante durch ein weiteres Halbleiter-Schaltelement 21 ergänzt. Dieses wird über eine innerhalb des Schaltreglers 4 angeordnete Kontrolleinheit 22 mit einer deutlich niedrigeren Taktfrequenz als Schalter 5 angesteuert und bewirkt, daß bei einem Abschalten des Boost-Taktes der Stromfluß durch den LED-Pfad unterbrochen wird, so daß keine abklingenden Stromverläufe auftreten. Die entsprechenden Kurven des Taktsignals III für den Schalter 5 und den LED-Strom (Kurve IV) sind in Fig. 8b dargestellt. Wie diesen Kurven zu entnehmen ist, wird durch diese zusätzliche Maßnahmen ein direktes Umschalten des LED-Stromes auf Null erzielt, so daß keine Farbveränderungen auftreten. Die interne Kontrolleinheit 22 dient ferner auch dazu, die von dem externen Mikrocontroller 4 übermittelten Steuersignale in die beiden Referenzwerte I_{ref} bzw. U_{ref} umzusetzen.

Figur 9 schließlich zeigt eine weitere Ansteuerschaltung, die einen weiter verbesserten Wirkungsgrad gegenüber dem Ausführungsbeispiel mit dem ohmschen Meßwiderstand 6 oder dem steuerbaren Widerstand 7 entsprechend den Fig. 1 und 2 gewährleistet. Anstelle des in Serie mit den Leuchtdioden 1 geschalteten Meßwiderstands 6 oder steuerbaren Widerstands 7 zur Erfassung des Stromes durch die Leuchtdioden 1 ist in der Nähe der Leuchtdioden 1 wenigstens eine Photodiode 12 angeordnet. Diese Photodiode 12 erfaßt die Helligkeit der Leuchtdioden 1. In Serie mit der Photodiode 12 ist ein ohmscher Meßwiderstand 13 geschaltet, wobei die über dem Meßwiderstand 13 abfallende Spannung als Meßsignal Uₘₑₛₛ dem Schaltregler 4 zugeführt wird. Die Photodioden 12 sind vorzugsweise mit der gleichen Spannungsversorgung 2 in Form der Gleichspannungsquelle bzw. des AC/DC-Umsetzers verbunden.

Der Schaltregler 5 kann auch hier sowohl als Hochsetzsteller als auch als Tiefsetzsteller ausgebildet sein. Da mit den Leuchtdioden 1 kein Widerstand in Serie geschaltet ist, der den Wirkungsgrad der Schaltung durch einen entsprechenden Leistungsabfall vermindert, kann gemäß Figur 9 der Wirkungsgrad der Ansteuerschaltung gegenüber dem von Figur 1 und 2 weiter verbessert werden. Je nach dem Wirkungsgrad der verwendeten Leuchtdioden 1 selbst macht sich diese Verbesserung des Wirkungsgrades mehr oder weniger deutlich bemerkbar.

Ferner ist es ebenso möglich, die Schaltung gemäß Figur 9 mit einer der in den Figuren 1 bis 7 gezeigten Ansteuerschaltungen zu kombinieren. Das heißt, die Erfassung der Helligkeit der Leuchtdioden mittels einer oder mehrerer Photodioden 12 kann auch zusätzlich zur Erfassung des Stroms durch die Leuchtdioden 1 und der Spannung vorgesehen sein. Dies erhöht die Genauigkeit und Zuverlässigkeit der Regelung mittels der Ansteuerschaltung, da zur Regelung des Stroms bzw. der Spannung mindestens zwei Meßwerte herangezogen werden.

Abschließend soll nunmehr auf den strukturellen Aufbau der erfindungsgemäßen Ansteuerschaltungen eingegangen werden, der sich insbesondere bei der Verwendung von Schaltzeit-Parametern mit Frequenzen im Bereich von 200 kHz bis 1 MHz anbietet. Für die Integrierung der passiven Bauelemente bietet sich die bereits erwähnte LTCC-Mehrlagenschaltung an. Die Herstellung einer derartigen Keramik-Mehrlagenstruktur soll nun anhand der Figuren 10a-15 erläutert werden.

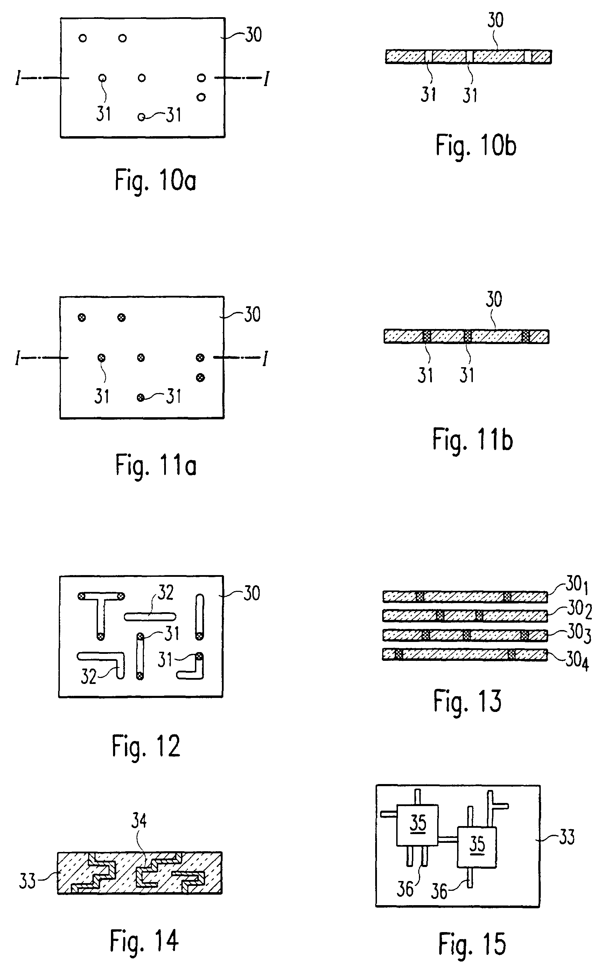

Den Grundbaustein einer LTCC-Struktur bildet eine ca. 100-130 µm dicke niedrig sinternde Keramikfolie - beispielsweise aus Aluminiumoxid, das mit Glaspartikeln und weiterem Füller-Material vermischt ist - wie sie in Fig. 10a in Draufsicht gezeigt ist. Der erste Bearbeitungsschritt besteht darin, in die Keramikfolie 30 Durchkontaktierungslöcher 31 zu stanzen. Fig. 10b zeigt die entsprechend bearbeitete Keramikfolie 30 im Schnitt I-I der Fig. 10a. Vor dem Brennprozess beträgt der Durchmesser der Durchkontaktierungslöcher 31 in etwa 250 µm. Im nächsten in den Figuren 11a und 11b dargestellten Arbeitsschritt werden die Durchkontaktierungslöcher 31 dann mit einem leitfähigem Material, üblicherweise mit einer Leiterpaste, die einen relativ hohen Feststoffanteil enthält, gefüllt.

Entsprechend der gewünschten schaltungstechnischen Struktur werden dann auf die Oberseite der Keramikfolie 30 Leiterbahnen 32 aufgedruckt (Fig. 12). Dies erfolgt üblicherweise mittels Siebdruckverfahren. Dabei werden für die Durchkontaktierungen und für die Leiterbahnen Silber-, Silber/Palladium-, Gold- oder Kupferpasten verwendet. Um Durchbiegungen zu vermeiden wird die Materialzusammensetzung der Leiterpasten so gewählt, daß diese beim späteren Sintern in gleichem Maße wie die Keramikschichten 30 selbst schrumpfen.

Die eben beschriebenen Bearbeitungsschritte werden zunächst für jede Keramikfolie 30 getrennt durchgeführt. Die einzelnen Lagen gestanzter und bedruckter Keramikfolien 30 werden dann übereinander angeordnet und ausgerichtet, wie dies in Fig. 13 gezeigt ist. Anschließend werden sie in einer Pressform gestapelt und unter Zuführung von Wärme und Druck laminiert, so daß sich eine zusammenhängende Keramikstruktur bildet.

Diese wird schließlich zu einer hochfesten Keramikstruktur gesintert, wobei sich - wie in Fig. 14 gezeigt ist - ein homogenes Keramiksubstrat 33 mit einem darin integrierten zusammenhängenden Leiterbahnen-Netz 34 bildet.

In dem in Fig. 15 gezeigten abschließenden Bearbeitungsschritt werden dann die nicht in die Keramikschaltung integrierbaren Bauteile, beispielsweise diverse Halbleiterbaugruppen 35 an der Oberseite des Keramiksubstrats 33 befestigt und kontaktiert. Dabei können nachträglich auch auf die Oberseite Leiterbahnen 36 aufgebracht werden. Schließlich wird der gesamte Komplex mit Anschlüssen versehen und mit einem metallischen Gehäuse umgeben, das zum einen die Wärmeableitung erhöht und zum anderen die während des Betriebs entstehenden hochfrequenten elektromagnetischen Felder abschirmt.

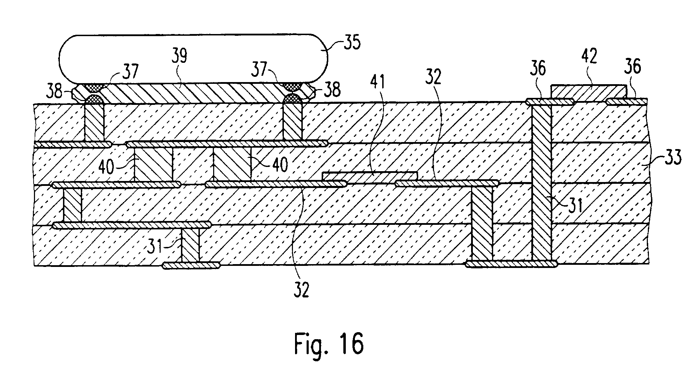

Fig. 16 zeigt nochmals in vergrößerter Darstellung einen Bereich der LTCC-Struktur im Schnitt. Dabei sind noch die Trennlinien zwischen den einzelnen ursprünglichen Keramikschichten eingezeichnet, auch wenn sich - wie zuvor beschrieben - nach dem Laminieren und Sintern eine homogene Keramikstruktur 33 bildet. Wie auf der rechten Seite der Abbildung zu sehen ist, können sich dabei die vertikal verlaufenden Leiterbahnen 31, die durch die im ersten Verfahrensschritt herausgestanzten Durchkontaktierungslöcher gebildet werden, auch über mehrere Ebenen erstrecken. Der wesentliche Vorteil der Verwendung einer LTCC-Struktur besteht darin, daß nicht nur Leiterbahnen 31 bzw. 32 sondern auch andere passive Bauelemente in die Mehrlagenschaltung integriert werden können. Im Rahmen des in Fig. 7 gezeigten Bearbeitungsschrittes können neben der Leiterpaste für die allgemeinen Leiterbahnen 32 beispielsweise auch andere Materialien mit bestimmter Leitfähigkeit auf die Oberseite einer einzelnen Keramikschicht 30 aufgebracht werden, so daß auf diese Weise ein Widerstand 41 vollkommen in die Keramikstruktur 33 integriert werden kann. Neben den üblichen Durchkontaktierungslöchern 31 können aber beispielsweise auch größere vertikal verlaufende Löcher in eine Keramikschicht 30 eingestanzt werden. Diese können dann mit einem Material 40 mit einer bestimmten Dielektrizitätskonstante gefüllt werden, so daß durch die in Fig. 16 gezeigten Schichtanordnung Leiterbahn - Dielektrikum 40 - Leiterbahn in das Keramiksubstrat 33 integrierte Kapazitäten realisiert werden können.

Ferner könnte eine Induktivität innerhalb der Keramikstruktur 33 durch eine auf eine einzelne Keramikschicht 30 aufgedruckte spiralenartige Leiterbahn realisiert werden. Denkbar wäre allerdings auch, die verschiedenen Wicklungen der Induktivität auf mehrere Leiterbahn-Ebenen zu verteilen. Derartige Strukturen werden auch als planare Induktivitäten bezeichnet. Zur Erhöhung der Induktivität, könnte ferner auch eine Öffnung oder Ausnehmung in dem Keramiksubstrat 33 vorgesehen werden, die mit einem geeigneten Kern-Material, beispielsweise Ferrit, gefüllt wird.

Für die in die Mehrlagenschaltung integrierten Bauelemente können nur Induktivitätsund Kapazitätswerte bis zu einer bestimmten Höhe erreicht werden. Diese Werte sind allerdings für einen ordnungsgemäßen Betrieb der erfindungsgemäßen Ansteuerschaltung bei Frequenzen im Bereich zwischen 200 kHz und 1 MHz ausreichend.

Allerdings können bei der LTCC-Technik nicht sämtliche Bauelemente der Ansteuerschaltung in die Mehrlagenschaltung 33 integriert werden. Beispielsweise wird der Operationsverstärker durch eine Halbleiter-Baugruppe 35 gebildet, die nicht in die Keramikschicht 33 integriert werden kann. Vorzugsweise werden dann solche Halbleiter-Baugruppen 35 an der Oberseite der Mehrlagenschaltung 33 mittels Flip-Chip-Technik kontaktiert. Dabei wird zwischen die Oberseite des Keramiksubstrats 33 und die ungehäuste Halbleiterschaltung 35 ein anisotrop elektrisch leitender Kunststoff eingebracht, der senkrecht zur Flip-Chip-Kontaktierungsebene elektrisch leitfähig und in der Kontaktierungsebene isolierend wirkt. Als elektrisch leitende Partikel enthält der Kunststoff beispielsweise unregelmäßig geformte Metallstückchen oder aber auch kleinere Kügelchen oder Fasern, welche eine Kontaktierung zwischen den Oberflächenkontakten 38 des Keramiksubstrats 33 und den Anschlußpads 37 der Halbleiterbaugruppe 35 bewirken. Ferner nimmt dieser Kunststoff 38 auch Spannungen auf, die sich durch eine unterschiedlich thermische Ausdehnung des Keramikmaterials und der Halbleiterbaugruppe 35 ergeben können. Diese Flip-Chip-Technik ermöglicht eine sehr hohe Kontaktierungsdichte, so daß sie ebenfalls zu einer Volumenreduzierung des gesamten Schaltung beiträgt. Auch die Leuchtdioden selbst können mit dieser Technologie auf die Oberseite der Mehrlagenschaltung 35 aufgebracht werden. Selbstverständlich können auch Widerstände 42 oder Induktivitäten der Schaltung als diskrete Teile an der Oberfläche angeordnet werden.

## Patentansprüche

1. Ansteuerschaltung für wenigstens eine Leuchtdiode (1),
mit einem mit einer Gleichspannung (2, 11) als Eingangsspannung versorgten Schaltregler (4), der an seiner Ausgangsseite die wenigstens eine Leuchtdiode (1) ansteuert, aufweisend:
- Mittel zur Erfassung des Stroms durch die Leuchtdiode sowie der Spannung an der Leuchtdiode,
- eine Regelvorrichtung,
- der ein Stromsollwert und ein Spannungssollwert sowie Signale zugeführt werden, die den erfassten Strom und die erfasste Spannung an der Leuchtdiode wiedergeben, und
- die den Stroms und die Spannung der wenigstens einen Leuchtdiode (1) auf den jeweiligen Sollwert regelt, und
- einen Controller (3) zur Einstellung der Sollwerte.

2. Ansteuerschaltung nach Anspruch 1,
**dadurch gekennzeichnet,**
**dass** weiterhin die Helligkeit der Leuchtdiode(n) erfasst und der Regelvorrichtung zugeführt wird.

3. Ansteuerschaltung nach einem der vorhergehenden Ansprüche,
**dadurch gekennzeichnet,**
**daß** ein AC/DC-Umsetzer (11) zur Bereitstellung der Gleichspannung vorgesehen ist, und daß der Schaltregler (4) in den AC/DC-Umsetzer (11) integriert ist.

4. Ansteuerschaltung nach einem der vorhergehenden Ansprüche,
**dadurch gekennzeichnet,**
**daß** der Schaltregler (4) ein Halbleiter-Schaltelement (5) aufweist, welches von dem Controller (3) ansteuerbar ist.

5. Ansteuerschaltung nach einem der vorhergehenden Ansprüche
**dadurch gekennzeichnet,**
**daß** der Controller (3) das Halbleiter-Schaltelement (5) durch Amplitudenmodulation, Pulsweitenmodulation oder über ein Variofrequenzverfahren ansteuert.

6. Ansteuerschaltung nach einem der Ansprüche 1 bis 4,
**dadurch gekennzeichnet,**
**daß** der Controller (3) durch Einstellen des Sollwerts das Schaltverhalten des Schaltreglers (4) derart verändert, daß die Schaltfrequenz und/oder das Tastverhältnis des Schaltreglers (4) verändert wird.

7. Ansteuerschaltung nach einem der Ansprüche 1 bis 6,
**dadurch gekennzeichnet,**
**daß** ein Meßwiderstand (6) zum Erfassen des Stroms durch die Leuchtdiode (1) vorgesehen ist, der in Serie mit der Leuchtdiode (1) geschaltet ist.

8. Ansteuerschaltung nach einem der Ansprüche 1 bis 7,
**dadurch gekennzeichnet,**
**daß** ein Meßwiderstand (16) zum Erfassen der Spannung über die Leuchtdiode (1) vorgesehen ist, der in parallel zur Leuchtdiode (1) geschaltet ist.

9. Ansteuerschaltung nach einem der vorhergehenden Ansprüche,
**dadurch gekennzeichnet,**
**daß** zum Einstellen des Sollwerts ein steuerbarer Widerstand (7) vorgesehen ist, der mit der Leuchtdiode (1) in Serie geschaltet und durch den Controller (3) einstellbar ist.

10. Ansteuerschaltung nach Anspruch 9,
**dadurch gekennzeichnet,**
**daß** der steuerbare Widerstand (7) ein Feldeffekttransistor ist.

11. Ansteuerschaltung nach Anspruch 9 oder 10,
**dadurch gekennzeichnet,**
**daß** der Strom durch die Leuchtdiode (1) mittels der über dem steuerbaren Widerstand (7) abfallenden Spannung erfaßbar ist.

12. Ansteuerschaltung nach einem der vorhergehenden Ansprüche,
**dadurch gekennzeichnet,**
**daß** eine Photodiode (12) zum Erfassen der Helligkeit der Leuchtdiode (1) vorgesehen ist.

13. Ansteuerschaltung nach einem der vorhergehenden Ansprüche,
**dadurch gekennzeichnet,**
**daß** der Schaltregler (4) ein Hochsetzsteller, ein Tiefsetzsteller oder ein isolierender Sperrwandler ist.

14. Ansteuerschaltung nach einem der vorhergehenden Ansprüche,
**dadurch gekennzeichnet,**
**daß** der Schaltregler (4) eine Boostdrossel (10) aufweist, welche induktive mit einer weiteren Spule (10), die an den Ausgang des Schaltreglers (4) angeschlossen ist, gekoppelt ist.

15. Ansteuerschaltung nach einem der vorhergehenden Ansprüche,
**dadurch gekennzeichnet,**
**daß** am Ausgang des Schaltreglers (4) ein Glättungskondensator (20) angeordnet ist.

16. Ansteuerschaltung nach einem der vorhergehenden Ansprüche,
**dadurch gekennzeichnet,**
**daß** im Strompfad der LED (1) ein weiteres steuerbares Schaltelement (21) angeordnet ist.

17. Ansteuerschaltung nach einem der vorhergehenden Ansprüche,
**dadurch gekennzeichnet,**
**daß** der Schaltregler (4) mit Frequenzen im Bereich zwischen 200 kHz und 1 MHz betrieben wird.

18. Ansteuerschaltung nach einem der vorherigen Ansprüche,
**dadurch gekennzeichnet,**
**daß** diese mindestens eine Mehrlagenschaltung (33) aufweist, in die passive Bauelemente (40, 41) der Ansteuerschaltung integriert sind.

19. Ansteuerschaltung nach Anspruch 18,
**dadurch gekennzeichnet,**
**daß** eine Mehrlagenschaltung aus mehreren übereinander angeordneten Leiterplatten besteht, an deren Ober- und/oder Unterseiten Leiterbahnen aus einem leitfähigen Material aufgebracht sind und die zum Verbinden von verschiedenen Leitungsebenen Durchkontaktierungslöcher aufweisen, die ebenfalls mit einem leitfähigen Material gefüllt sind.

20. Ansteuerschaltung nach Anspruch 19,
**dadurch gekennzeichnet,**
**daß** es sich bei der Mehrlagenschaltung um eine LTCC-Struktur (33) handelt, welche aus mehreren übereinander angeordneten niedrig sinternden Keramikschichten (30) besteht, zwischen denen sich Leiterbahnen (32) befinden, wobei die Keramikschichten (30) Durchkontaktierungslöcher (31) zum Verbinden von Leiterbahnen (32) unterschiedlicher Ebenen aufweisen.

21. Ansteuerschaltung nach einem der Ansprüche 18 bis 20,
**dadurch gekennzeichnet,**
**daß** die Mehrlagenschaltung (33) von einem metallischen Gehäuse umgeben ist.

22. Ansteuerschaltung nach einem der Ansprüche 18 bis 21,
**dadurch gekennzeichnet,**
**daß** Halbleiterbaugruppen (35) auf der Oberfläche der Mehrlagenschaltung (33) mittels Flip-Chip-Technologie befestigt sind.

## Claims

1. Control circuit for at least one light emitting diode (1),
having a switched regulator (4) supplied with a d.c. voltage (2, 11) as input voltage, which at its output side controls the at least one lamp emitting diode (1), having:
- means for detecting the current of the light emitting diode and the voltage of the light emitting diode,
- a regulation device,
- to which there are supplied a current desired value and a voltage desired value and signals which represent the detected current and the detected voltage at the light emitting diode, and
- which regulates the current and the voltage of the at least one light emitting diode (1) to the respective desired value, and
- a controller (3) for setting the desired values.

2. Control circuit according to claims 1,
**characterized in that**,
further the brightness of the light emitting diode(s) is detected and supplied to the regulation device.

3. Control circuit according to any preceding claim,
**characterized in that**,
there is provided an AC/DC converter (11) for making the d.c. voltage available, and **in that** the switched regulator (4) is integrated into the AC/DC converter (11).

4. Control circuit according to any preceding claim,
**characterized in that**,
the switched regulator (4) has a semiconductor switching element (5) which is controllable from the controller (3).

5. Control circuit according to any preceding claim,
**characterized in that**,
the controller (3) controls the semiconductor switching element (5) by means of amplitude modulation, pulse width modulation or via a variable frequency process.

6. Control circuit according to any of claims 1 to 4,
**characterized in that**,
the controller (3), through setting of the desired value, so alters the switching behaviour of the switched regulator (4) that the switching frequency and/or the duty ratio of the switched regulator (4) is altered.

7. Control circuit according to any of claims 1 to 6,
**characterized in that**,
there is provided a measurement resistance (6) for the detection of the current through the light emitting diode (1), which resistance is connected in series with the light emitting diode (1).

8. Control circuit according to any of claims 1 to 7,
**characterized in that**,
there is provided a measurement resistance (16) for the detection of the voltage across the light emitting diode (1), which resistance is connected in parallel to the light emitting diode (1).

9. Control circuit according to any preceding claim,
**characterized in that**,
a controllable resistance (7) is provided for the setting of the desired value, which resistance is connected in series with the light emitting diode (1) and is settable by means of the controller (3).

10. Control circuit according to claim 9,
**characterized in that**,
the controllable resistance (7) is a field effect transistor.

11. Control circuit according to claim 9 or 10,
**characterized in that**,
the current through the light emitting diode (1) is detectable by means of the voltage dropping across the controllable resistance (7).

12. Control circuit according to any preceding claim,
**characterized in that**,
there is provided a photo diode (12) for the detection of the brightness of the light emitting diode (1).

13. Control circuit according to any preceding claim,
**characterized in that**,
the switched regulator (4) is a step-up converter, a step-down converter or an insulating isolation transformer.

14. Control circuit according to any preceding claim,
**characterized in that**,
the switched regulator (4) has a boost choke (10) which is inductively coupled with a further coil (10) which is connected to the output of the switched regulator (4).

15. Control circuit according to any preceding claim,
**characterized in that**,
there is arranged at the output of the switched regulator (4) a smoothing capacitor (20).

16. Control circuit according to any preceding claim,
**characterized in that**,
there is arranged in the current path of the light emitting diode (1) a further controllable switch element (21).

17. Control circuit according to any preceding claim,
**characterized in that**,
the switched regulator (4) is operated with frequencies in the region between 200 kHz and 1 MHz.

18. Control circuit according to any preceding claim,
**characterized in that**,
this has at least one multi-layer circuit (33) in which the passive components (40, 41) of the control circuit are integrated.

19. Control circuit according to claim 18,
**characterized in that**,
a multi-layer circuit is of a plurality of circuit boards arranged one above another, on the upper and/or lower sides of which there are applied conductor paths of a conductive material and which for connection of various conductor planes have through-contact holes which are likewise filled with a conductive material.

20. Control circuit according to claim 19,
**characterized in that**,
the multi-layer circuit is a LTCC structure (33), which is of a plurality of low-temperature sintering ceramic layers (30) arranged over one another, between which conductor paths (32) are located, whereby the ceramic layers (30) have through-contact holes (31) for the connection of conductor paths (32) of different planes.

21. Control circuit according to any of claims 18 to 20,
**characterized in that**,
the multi-layer circuit layer circuit (33) is surrounded by a metallic housing.

22. Control circuit according to any of claims 18 to 21,
**characterized in that**,
semiconductor component groups (35) are attached to the surface of the multi-layer circuit (33) by means of flip-chip technology.

## Revendications

1. Circuit de commande d'au moins une diode luminescente (1), comportant un régulateur de commutation (4) qui est alimenté avec une tension continue (2, 11) en tant que tension d'entrée (1) et qui commande en sortie au moins la diode luminescente (1), ledit circuit de commande comportant :
- des moyens de mesure du courant dans la diode luminescente ainsi que de la tension aux bornes de la diode luminescente,
- un dispositif de régulation,
auquel sont amenés une valeur de courant de consigne et une valeur de tension de consigne ainsi que des signaux qui sont représentatifs du courant mesuré et de la tension mesurée aux bornes de la diode luminescente, et
qui régule le courant et la tension de l'au moins une diode luminescente (1) à la valeur de consigne, et
- un organe de commande (3) destiné à régler les valeurs de consigne.

2. Circuit de commande selon la revendication 1, **caractérisé en ce qu'**en outre la luminosité de la diode luminescente ou des diodes luminescentes est mesurée et amenée au dispositif de régulation.

3. Circuit de commande selon l'une des revendications précédentes, **caractérisé en ce qu'**il est prévu un convertisseur de courant (11) de type AC/DC destiné à générer la tension continue et **en ce que** le régulateur de commutation (4) est intégré dans le convertisseur de courant (11).

4. Circuit de commande selon l'une des revendications précédentes, **caractérisé en ce que** le régulateur de commutation (4) comporte un élément de commutation à semi-conducteur (5) qui peut être commandé par l'organe de commande (3).

5. Circuit de commande selon l'une des revendications précédentes, **caractérisé en ce que** l'organe de commande (3) commande l'élément de commutation à semi-conducteur (5) en modulation d'amplitude, en modulation de largeur d'impulsion ou par un procédé à fréquence variable.

6. Circuit de commande selon la revendication 1 à 4, **caractérisé en ce que** l'organe de commande (3) modifie le comportement en commutation du régulateur de commutation (4), en réglant la valeur de consigne, de façon à modifier la fréquence de commutation et/ou le facteur de durée des impulsions du régulateur de commutation (4).

7. Circuit de commande selon la revendication 1 à 6, **caractérisé en ce qu'**il est prévu une résistance de mesure (6) qui est montée en série avec la diode luminescente (1) et qui est destinée à mesurer le courant dans la diode luminescente (1).

8. Circuit de commande selon la revendication 1 à 7, **caractérisé en ce qu'**il est prévu une résistance de mesure (16) qui est montée en parallèle avec la diode luminescente (1) et qui est destinée à mesurer la tension aux bornes de la diode luminescente (1).

9. Circuit de commande selon l'une des revendications précédentes, **caractérisé en ce qu'**il est prévu une résistance commandée (7) qui est destinée à régler la valeur de consigne, qui est montée en série avec la diode luminescente (1) et qui est réglable au moyen de l'organe de commande (3).

10. Circuit de commande selon la revendication 9, **caractérisé en ce que** la résistance commandée (7) est un transistor à effet de champ.

11. Circuit de commande selon la revendication 9 ou 10, **caractérisé en ce que** le courant dans la diode luminescente (1) est mesuré au moyen de la tension aux bornes de la résistance commandée (7).

12. Circuit de commande selon l'une des revendications précédentes, **caractérisé en ce qu'**il est prévu une photodiode (12) destinée à mesurer la luminosité de la diode luminescente (1).

13. Circuit de commande selon l'un des revendications précédentes, **caractérisé en ce que** le régulateur d commutation (4) est un survolteur, un abaisseur de tension ou un convertisseur d'isolation bloqué.

14. Circuit de commande selon l'une des revendications précédentes, **caractérisé en ce que** le régulateur de commutation (4) comporte un survolteur à bobine (10) qui est couplé par induction avec une autre bobine (10) qui est raccordée à la sortie du régulateur de commutation (4).

15. Circuit de commande selon l'une des revendications précédentes, **caractérisé en ce qu'**un condensateur (20) de lissage est placé en sortie du régulateur de commutation (4).

16. Circuit de commande selon l'une des revendications précédentes, **caractérisé en ce qu'**un autre élément de commutation (21) commandé est placé dans le trajet de courant de la LED (1).

17. Circuit de commande selon l'une des revendications précédentes, **caractérisé en ce que** le régulateur de commutation (4) est exploité à des fréquences dans la gamme allant de 200 kHz à 1 MHz.

18. Circuit de commande selon l'une des revendications précédentes, **caractérisé en ce qu'**il comporte au moins un circuit à multicouches (33) dans lequel sont intégrés des composants passifs (40, 41) du circuit de commande.

19. Circuit de commande selon la revendication 18, **caractérisé en ce qu'**un circuit à multicouches est constitué de plusieurs cartes de circuits imprimés placées l'une au-dessus de l'autre, aux surfaces supérieures et/ou inférieures desquelles sont déposées des pistes conductrices en matière conductrice et qui comportent des trous de connexion qui sont destinés à relier les différents plans de conduction et qui sont remplis de matière conductrice.

20. Circuit de commande selon la revendication 19, **caractérisé en ce que** le circuit à multicouches est une structure LTCC (33) qui est constituée de plusieurs couches de céramique (30) qui sont faiblement frittées et placées l'une au-dessus de l'autre et entre lesquelles se trouvent des pistes conductrices (32), les couches de céramique (30) comportant des trous de connexion (31) destinés à relier des pistes conductrices (32) de différents plans.

21. Circuit de commande selon l'une des revendications 18 à 20, **caractérisé en ce que** le circuit à multicouches (33) est entouré d'un boîtier métallique.

22. Circuit de commande selon l'une des revendications 18 à 21, **caractérisé en ce que** des modules semi-conducteurs (35) sont fixés à la surface du circuit à multicouches (33) par la technologie planaire.
